# EUROPÄISCHE PATENTSCHRIFT

(11) **EP 0 756 474 B1**
(45) Veröffentlichungstag und Bekanntmachung des Hinweises auf die Patenterteilung: **08.08.2001**
(21) Anmeldenummer: 95940109.2
(22) Anmeldetag: 20.12.1995
(51) Int. Cl.: A61C 17/02, A61C 17/028, A46B 9/04

(54) **MUNDDUSCHE MIT EINEM BÜGELFÖRMIGEN DÜSENHALTER**
ORAL DOUCHE WITH A STIRRUP-SHAPED NOZZLE HOLDER
DOUCHE BUCCALE POURVUE D'UN ELEMENT A AJUTAGES EN FORME D'ETRIER

(30) Priorität: 17.02.1995 CH 47595
(43) Veröffentlichungstag der Anmeldung: 05.02.1997
(73) Patentinhaber: TRISA BÜRSTENFABRIK AG TRIENGEN, CH-6234 Triengen (CH)
(72) Erfinder: SAXER, Ulrich, P., CH-8053 Zürich (CH); FISCHER, Franz, CH-6234 Triengen (CH)
(74) Vertreter: Patentanwälte Schaad, Balass, Menzl & Partner AG
(86) Internationale Anmeldenummer: CH9500302
(87) Internationale Veröffentlichungsnummer: WO9625121

(56) Entgegenhaltungen:
- CH-A- 365 178
- DE-A- 4 208 664
- US-A- 4 611 992
- US-A- 4 991 570
- US-A- 5 360 025

## Beschreibung

Die Erfindung betrifft eine Munddusche mit einem bügelförmigen Düsenhalter nach dem Oberbegriff des Patentanspruchs 1.

Eine solche Munddusche ist beispielsweise bekannt aus DE-A-40 29 369, welche einen einen Tunnel bildenden, etwa U-förmigen Düsenkopf mit im Innern vierzig um den Umfang des U-Bogens herum in vier Ebenen angeordneten Spritzdüsen aufweist. Die Endbereiche des U-förmigen Düsenkopfs sind in Richtung auf die Zähne heruntergezogen, so dass diese Endflächen an den Flächen der Zähne geführt werden. Der Düsenkopf hat eine Länge von etwa 2 cm, so dass beim Entlangfahren an den Zähnen etwa zwei bis drei Zähne gleichzeitig erfasst werden. Die Spritzdüsen sind so angeordnet, dass die Spritzstrahlen im mittleren Bereich senkrecht auf die Zahnflächen, in den Endbereichen unter einem Winkel von 45° und von unten unter einem spitzen Winkel nach oben gerichtet sind. Diese letzte Spritzrichtung ist vorgesehen, damit die Spritzstrahlen vom Zahnfleisch fort auf die Zahnflächen auftreffen, um zu verhindern, dass Speiseresten oder dergleichen in die Zahnfleischtaschen gespült werden.

Obwohl die Spritzstrahlen sich getrennt zueinander ausbilden, ist nicht zu vermeiden, dass ein grosser Wasserschwall sich auf der Zahnoberfläche ergibt. Der Düsenkopf muss ausserdem mit äusserst hoher Präzision hergestellt werden, um den angegebenen Effekt hervorbringen zu können. Bei der grossen Anzahl Spritzdüsen muss die Spülflüssigkeit mit hohem Druck durch diesen hindurchgeleitet werden, um eine ausreichende Reinigung zu erzielen. Ein weiterer Nachteil bei dieser bekannten Ausbildung der Munddusche ist, dass kaum verhindert werden kann, dass eine grössere Menge Spülflüssigkeit im Mund anfällt, so dass diese immer wieder ausgespuckt und dazu die Reinigung unterbrochen werden muss. Auch die Breite des Düsenkopfes, welche etwa zwei bis drei Zähne umfasst, stellt eine Behinderung der Drehbeweglichkeit am Zahnbogen dar, so dass eine einwandfreie Handhabung nicht immer gegeben ist.

Der vorliegenden Erfindung liegt die Aufgabe zugrunde, eine Munddusche der vorgenannten Art so zu verbessern, dass bei einer einfacheren Ausbildung einer Munddusche der vorgenannten Art eine erhöhte Spülwirkung auf die Zähne erfolgt.

Diese Aufgabe wird durch die Merkmale des Patentanspruchs 1 gelöst.

Die Erfindung hat den wesentlichen Vorteil, dass mit wesentlich weniger Düsenstrahlen eine erhöhte Reinigungs- und Spülwirkung erfolgen und eine anatomisch besser an die Zähne angepasste Form des Düsenhalters erhalten werden kann. Ein weiterer Vorteil ist, dass die Menge an anfallender Spülflüssigkeit geringer ist, und dadurch die Handhabung der Munddusche einfacher wird.

Weitere Vorteile ergeben sich aus den abhängigen Ansprüchen und aus der nachfolgenden Beschreibung, in welcher die Erfindung anhand eines in den schematischen Zeichnungen dargestellten Ausführungsbeispieles näher erläutert wird.

Es zeigt:
- Fig. 1: einen Querschnitt eines Düsenhalters einer Munddusche,
- Fig. 2: einen Querschnitt durch denselben Düsenhalter längs der Linie A-A in Fig. 1,
- Fig. 3: eine sehr schematische Skizze zur Verdeutlichung der Anwendung der Munddusche,
- Fig. 4: eine Variante der in Fig. 1 dargestellten Munddusche in Draufsicht, und
- Fig. 5: einen Querschnitt durch einen Schenkel der Munddusche der Fig. 4 längs einer zur Blattebene rechtwinkligen Schnittebene, die durch die in Fig. 4 mit B-B bezeichnete Linie angedeutet ist.

In den Figuren sind für dieselben Elemente jeweils dieselben Bezugszeichen verwendet und erstmalige Erklärungen gelten ebenfalls für die anderen Figuren, wenn nicht anderes erwähnt ist.

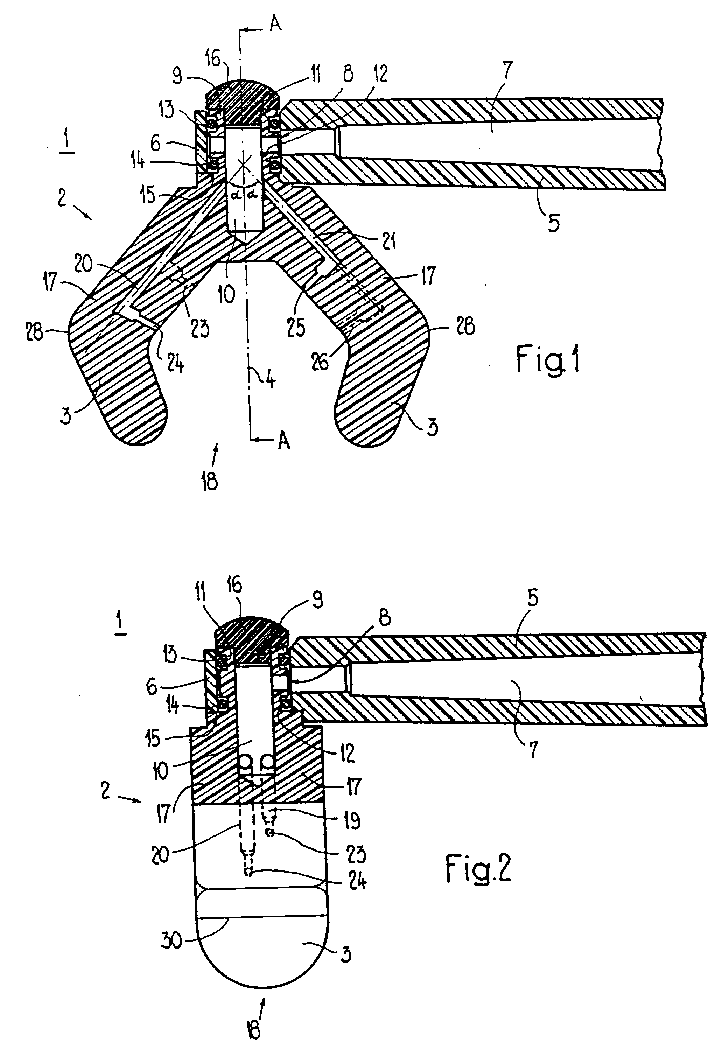

In den Figuren 1 und 2 ist eine Munddusche 1 gezeigt mit einem bügelförmigen Düsenhalter 2, der zwei gleichartig ausgebildete, hakenförmige Schenkel 3 aufweist. Der Düsenhalter 2 ist um eine Drehachse 4 drehbar mit einem Rohrstück 5 verbunden. Wie ersichtlich ist das Rohrstück 5 mit einem sich gegen einen ringförmigen Endbereich oder Ring 6 hin verjüngenden Kanal 7 ausgebildet, welcher in den kreiszylindrischen Hohlraum 8 des Ringes 6 mündet. Der obere Bereich 9 des Düsenhalters 2 ist als Zapfen ausgebildet, der eine Sacklochbohrung 10, auf der Drehachse 4 gegen die Schenkel 3 hin gerichtet, aufweist. Der Zapfen 9 ist aussen mit zwei parallelen umlaufenden Nuten 11 und 12 versehen, in welcher je ein O-Ring 13 und 14 aus Gummi zur Abdichtung mit dem ringförmigen Endbereich 6 eingelegt ist. Der Zapfen 9 weist eine Abstufung 15 in Richtung der Schenkel 3 auf, die als Anschlag für den Ring 6 dient. Die Sacklochbohrung 10 ist nach oben mit einem Stöpsel 16 abgeschlossen. Von der Sacklochbohrung 10 ausgehend sind im oberen Bereich 17 eines Schenkels 3 mit einem spitzen Winkel Ó gegen das offene Ende 18 des Düsenhalters 2 hin jeweils ein kurzer gerader Zufuhrkanal 19, bzw. 21 und ein langer gerader Zufuhrkanal 20, bzw. 22 vorgesehen. Die Zufuhrkanäle 19 und 20, bzw. 21 und 22 im selben Schenkel 3 sind in etwa parallel ausgerichtet. Am jeweiligen Ende des Zufuhrkanals 19 bis 22 ist eine Düsenöffnung 23 bis 26 vorgesehen, deren Düsenachse in etwa quer zur Längsrichtung des jeweiligen Zufuhrkanals 19 bis 22 steht. Die Düsenöffnungen 23 bis 26 sind alle gleich ausgebildet und weisen einen Durchmesser der Austrittsöffnung von etwa 0,5 mm auf. Wie in Figur 1 ersichtlich, sind der lange Zufuhrkanal 20 und der kurze Zufuhrkanal 21 in derselben Ebene angeordnet und ebenso die Zufuhrkanäle 19 und 22. Die Düsenöffnungen 23 und 24, bzw. 25 und 26 auf demselben Schenkel 3 sind auf einem genügend grossen Abstand zueinander angeordnet, dass die sehr leicht divergierenden, in etwa parallelen Düsenstrahlen sich gegenseitig nicht beeinflussen. Die Düsenstrahlen in derselben Ebene schneiden sich, und deren Schnittpunkt liegt jeweils etwa auf der Höhe des Knies 28 eines Schenkels 3.

Nicht dargestellt ist der Anschluss des als Aufsteckteil ausgebildeten Rohrstückes 5 mit einer Druckpumpe, mit welcher die Reinigungsflüssigkeit intermittierend mit einem hohen Druck beaufschlagt wird, so dass die Düsenstrahlen gleichzeitig intermittierend ausgestossen werden.

Die in Figur 2 ersichtliche Breite 30 des Schenkels 3 des Düsenhalters 2 umfasst höchstens die mittlere Breite eines Prämolaren, d.h. ist höchstens etwa 15 mm breit, vorzugsweise etwa zwischen 10 und 12 mm.

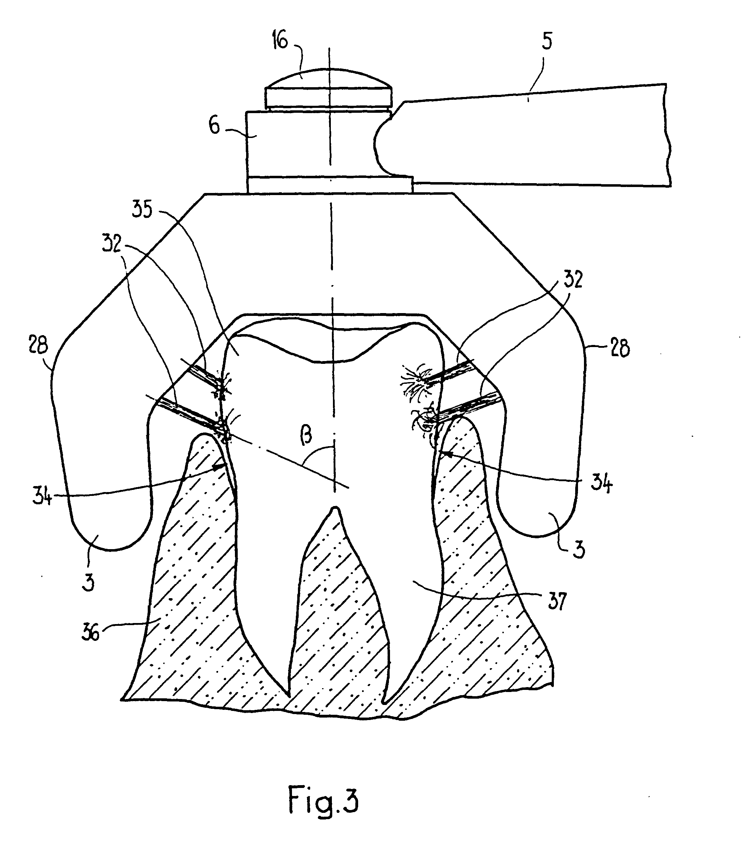

Die Funktion der Munddusche 1 wird nun unter Bezugnahme auf die Figur 3 verdeutlicht. Wie ersichtlich, sind die Düsenstrahlen 32 mit einem spitzen Winkel β auf einen Zahn 33 gerichtet. Dadurch werden die Düsenstrahlen 32 hin zu den Zahnfleischtaschen 34 zwischen der Zahnkrone 35 und dem Zahnfleisch 36 gerichtet. Dies steht gerade im Gegensatz zur Lehre der eingangs erwähnten DE-A-40 29 369, nach welcher die unteren Spritzstrahlen unter einem spitzen Winkel nach oben spritzen sollen, um nicht Speisereste oder dergleichen in die Zahnfleischtasche zu spülen. Ausführliche Untersuchungen haben jedoch gezeigt, dass allfällige Speisereste, welche bei der Spülung und Reinigung in die Zahnfleischtaschen 34 gelangen, innert Kürze durch das Sulcusfluid ausgeschwemmt werden. Da immer wieder Spülflüssigkeit nachgeführt wird, unterstützt dieses das Sulcusfluid, so dass diese natürliche Wirkung zusätzlich verstärkt wird. Der Düsenhalter 2 wird durch seine innere Form an den Kauflächen und Schneidflächen der Zähne und durch das Zahnfleisch 36 im Bereich der Zahnwurzel 37 geführt, wobei die geringe Breite des Düsenhalters 2 eine unproblematische Führung entlang eines beliebigen Zahnbogens gewährt. Die Düsenstrahlen 32 bewirken ferner eine leichte Massage des Zahnfleisches 36 und des Zahnfleischsaumes, ohne eine Art Schrubbwirkung zu entfalten, die zu einer Verletzung des Zahnfleisches führen könnte. Somit kann eine wirksame Reduktion der Gingivitis oder Zahnfleischentzündung erreicht werden. Um zu verhindern, dass Spritzern, die von den mit den Düsenstrahlen 34 beaufschlagten Zahnflächen zurückprallen, die Düsenstrahlen 34 irgendwie behindern, kann die Innenseite der Schenkel 3 in den Randbereichen mit Borsten versehen oder beflockt sein. Dadurch werden diese Spritzer abgefangen und laufen mit der übrigen Spülflüssigkeit ab. Die vorerwähnte Führung wird noch durch die mit Borsten versehenen oder beflockten Innenflächen des Düsenhalters 2 verbessert.

Die in den Figuren dargestellte Ausführung der Munddusche 1 stellt die bevorzugte Form dar, jedoch kann man sich leicht andere Ausgestaltungen der Munddusche vorstellen, welche eine ähnlich gute Wirkung entfalten. Insbesondere können die Zufuhrkanäle 19 und 20, bzw. 21 und 22 auch zusammengelegt werden, und die Düsenöffnungen 23 und 24, bzw. 25 und 26 je unter einem spitzen Winkel zur Ebene durch die zusammengelegten Zufuhrkanäle vorgesehen sein, welche dann in derselben Ebene durch die Drehachse 4 des Düsenhalters 2 angeordnet sind. Die Düsenöffnungen 19 und 20, bzw. 21 und 22 sind in einem solchen Fall windschief zueinander. In einem solchen Fall sind die Düsenachsen von zwei jeweils auf gegenüberliegenden Schenkeln 3 liegenden Düsenöffnungen mit Vorteil in derselben Ebene angeordnet. Auch können mehr Düsenöffnungen vorgesehen sein, wobei die maximale Anzahl auf zehn eingeschränkt werden muss, um eine noch ausreichende Spül- und Reinigungswirkung entfalten zu können.

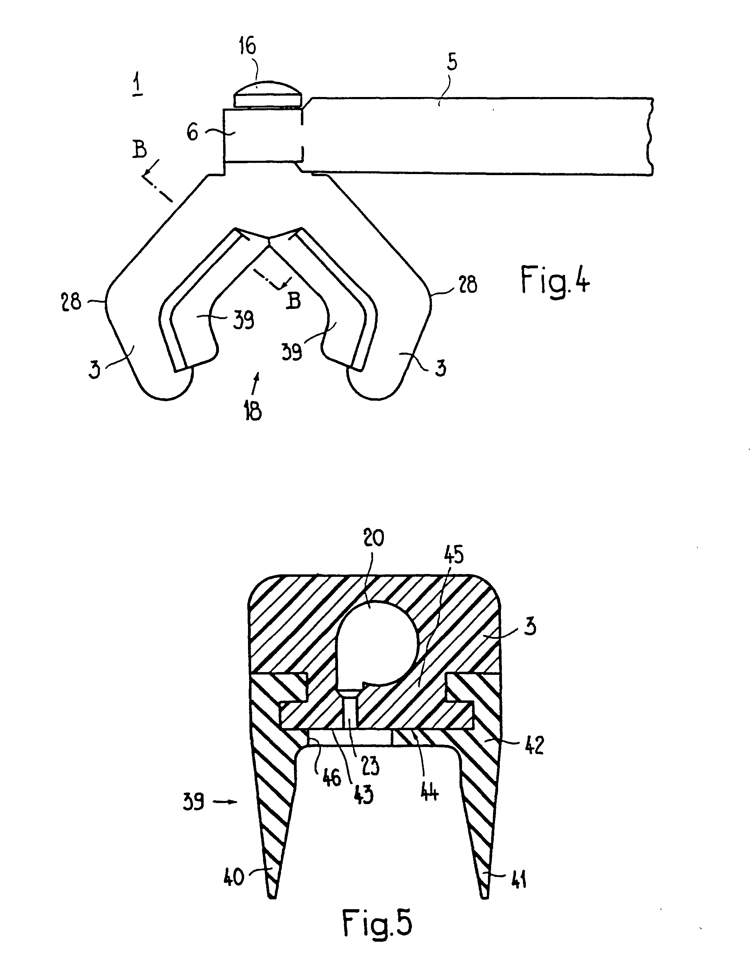

In den Figuren 4 und 5 ist eine Variante der Munddusche 1 mit einem bügelförmigen Düsenhalter 2 abgebildet, die auf der der Zahnoberfläche zugewandten inneren Seite der Schenkel 3 eine gummielastische Abschirmung 39 aufweist, um eine Abschirmwirkung der von der Zahnoberfläche zurückprallenden Wasserstrahlen zu ergeben. Die genaue Ausbildung dieser gummielastischen Abschirmung 39 ist aus der Figur 5 ersichtlich, welche einen Querschnitt längs der Linie B-B in Figur 4 durch eine dort nicht ersichtliche Düsenöffnung 23 (vergleiche Figur 1) darstellt. Die Abschirmung 39 besteht aus zwei seitlichen, spitz zulaufenden Lippen 40 und 41, die über einen Tragbereich 42 miteinander verbunden sind. Der Tragbereich 42 selber ist auf der dem Düsenhalter 2 zugewandten Seite mit einer T-förmigen Längsnut 43 versehen. Die Innenwände 44 der Schenkel 3 sind der Längsnut 43 entsprechend mit einem T-förmigen Tragelement 45 ausgebildet, wodurch die gummielastische Abschirmung 39 auf den Schenkel 3 aufgeschoben werden kann. Im Bereich der Düsenöffnung 23 (vergleiche auch Figur 1) ist im Tragbereich 42 eine dieser entsprechenden grösseren Durchlassöffnung 46 vorgesehen. Bei der Reinigung streifen die Lippen 40 und 41 über die Zahnoberfläche, so dass sich eine zusätzliche Reinigungswirkung ergibt. Als Werkstoff für die Lippen 40 und 41 und somit für die Abschirmung 39 hat sich Siliconkautschuk, insbesondere Silicongummi, besonders bewährt, weil dadurch eine Verletzung des Zahnfleisches am besten verhindert werden kann.

## Patentansprüche

1. Munddusche (1) mit einem bügelförmigen, die Zähne beidseitig mit zwei Schenkeln (3) umgreifenden Düsenhalter (2), welcher auf der Innenseite Düsenöffnungen (23 bis 26) aufweist und mit einem Rohrstück (5) drehbar verbunden ist, dadurch gekennzeichnet, dass die Breite (30) des Düsenhalters (2) höchstens der mittleren Breite eines Prämolaren entspricht und dass die Düsenöffnungen (23 bis 26) ausschliesslich in den Schenkeln (3) angeordnet und die Achsen der Düsenöffnungen (23 bis 26) auf einem jeweiligen Schenkel (3) in einem spitzen Winkel (β) zur Drehachse (4) und zum offenen Ende (18) des Düsenhalters (2) hin gerichtet sind, um die Düsenstrahlen (32) in Richtung der Zahnwurzel (37) auf die Seitenflächen der Zähne (33) zu richten.

2. Munddusche nach Anspruch 1, dadurch gekennzeichnet, dass die Breite (30) des Düsenhalters (2) höchstens 15 mm, vorzugsweise zwischen 10 und 12 mm, beträgt.

3. Munddusche nach Anspruch 1 oder 2, dadurch gekennzeichnet, dass für jede Düsenöffnung (23 bis 26) ein getrennter Zufuhrkanal (19 bis 22) vorgesehen ist.

4. Munddusche nach Anspruch 3, dadurch gekennzeichnet, dass die Zufuhrkanäle (19, 20; 21, 22) auf demselben Schenkel (3) parallel sind.

5. Munddusche nach Anspruch 3 oder 4, dadurch gekennzeichnet, dass je zwei auf sich gegenüberliegenden Schenkeln liegende Zufuhrkanäle (19, 22; 20, 21) in derselben Ebene liegen.

6. Munddusche nach Anspruch 1 oder 2, dadurch gekennzeichnet, dass die Düsenöffnungen eines selben Schenkels in einen gemeinsamen Zufuhrkanal münden.

7. Munddusche nach Anspruch 6, dadurch gekennzeichnet, dass die Düsenachsen der Düsenöffnungen auf demselben Schenkel (3) zueinander windschief sind.

8. Munddusche nach Anspruch 7, dadurch gekennzeichnet, dass die Düsenachsen von mindestens zwei Düsenöffnungen auf sich gegenüberliegenden Schenkeln (3) in derselben Ebene liegen.

9. Munddusche nach einem der Ansprüche 1 bis 8, dadurch gekennzeichnet, dass die Anzahl Düsenöffnungen höchstens zehn, vorzugsweise vier, beträgt.

10. Munddusche nach einem der Ansprüche 1 bis 9, dadurch gekennzeichnet, dass die inneren Randbereiche der Schenkel (3) des Düsenhalters (2) mit Borsten versehen oder beflockt sind.

11. Munddusche nach einem der Ansprüche 1 bis 9, dadurch gekennzeichnet, dass die der Zahnoberfläche zugewandten inneren Seiten der Schenkel (3) mit Lippen (40, 41) aufweisenden gummielastischen Abschirmungen (39) versehen sind.

## Claims

1. Oral irrigator (1) with a stirrup-shaped nozzle holder (2) which encloses the teeth on both sides via two branches (3) and which on the inner side has nozzle openings (23 to 26) and is connected in a rotatable manner to a tubular element (5),
characterized in that the width (30) of the nozzle holder (2) corresponds at most to the average width of a premolar, and in that the nozzle openings (23 to 26) are arranged exclusively in the branches (3), and the axes of the nozzle openings (23 to 26) on a respective branch (3) are oriented at an acute angle (β) to the axis of rotation (4) and towards the open end (18) of the nozzle holder (2), in order to direct the nozzle jets (32), in the direction of the root (37), onto the lateral surfaces of the teeth(33).

2. Oral irrigator according to Claim 1, characterized in that the width (30) of the nozzle holder (2) is at most 15 mm, preferably between 10 and 12 mm.

3. Oral irrigator according to Claim 1 or 2, characterized in that for each nozzle opening (23 to 26) a separate delivery channel (19 to 22) is provided.

4. Oral irrigator according to Claim 3, characterized in that the delivery channels (19, 20; 21, 22) on the same branch (3) are parallel.

5. Oral irrigator according to Claim 3 or 4, characterized in that in each case two delivery channels (19, 22; 20, 21) lying on opposite branches lie in the same plane.

6. Oral irrigator according to Claim 1 or 2, characterized in that the nozzle openings of a same branch open into a common delivery channel.

7. Oral irrigator according to Claim 6, characterized in that the nozzle axes of the nozzle openings on the same branch (3) are skew in relation to one another.

8. Oral irrigator according to Claim 7, characterized in that the nozzle axes of at least two nozzle openings on opposite branches (3) lie in the same plane.

9. Oral irrigator according to one of Claims 1 to 8, characterized in that the number of nozzle openings is at most ten, preferably four.

10. Oral irrigator according to one of Claims 1 to 9, characterized in that the inner edge regions of the branches (3) of the nozzle holder (2) are provided with bristles or covered with flock.

11. Oral irrigator according to one of Claims 1 to 9, characterized in that the inner sides of the branches (3) facing the tooth surface are provided with rubber-elastic protectors (39) which have lips (40, 41).

## Revendications

1. Douche buccale (1) comprenant un support de gicleur (2) en forme d'étrier, entourant les dents des deux côtés avec deux branches (3), lequel présente des ouvertures de gicleur (23 à 26) sur le côté intérieur et est connecté à rotation à un élément de tuyau (5), caractérisée en ce que la largeur (30) du support de gicleur (2) correspond au plus à la largeur moyenne d'une prémolaire et en ce que les ouvertures de gicleur (23 à 26) sont disposées exclusivement dans les branches (3) et les axes des ouvertures de gicleur (23 à 26) sur une branche respective (3) sont orientés suivant un angle aigu (β) par rapport à l'axe de rotation (4) et vers l'extrémité ouverte (18) du support de gicleur (2), afin d'orienter les jets du gicleur (32) dans la direction de la racine des dents (37) sur les côtés latéraux des dents (33).

2. Douche buccale selon la revendication 1, caractérisée en ce que la largeur (30) du support de gicleur (2) est de 15 mm au maximum, de préférence est comprise entre 10 et 12 mm.

3. Douche buccale selon la revendication 1 ou 2, caractérisée en ce que pour chaque ouverture de gicleur (23 à 26), il est prévu un canal d'amenée distinct (19 à 22).

4. Douche buccale selon la revendication 3, caractérisée en ce que les canaux d'amenée (19, 20; 21, 22) sont parallèles sur la même branche (3).

5. Douche buccale selon la revendication 3 ou 4, caractérisée en ce qu'à chaque fois deux canaux d'amenée (19, 22 ; 20, 21) se trouvent dans le même plan sur des branches en regard.

6. Douche buccale selon la revendication 1 ou 2, caractérisée en ce que les ouvertures de gicleur d'une même branche débouchent dans un canal d'amenée commun.

7. Douche buccale selon la revendication 6, caractérisée en ce que les axes de gicleur des ouvertures de gicleur sont gauchis sur la même branche (3) les uns par rapport aux autres.

8. Douche buccale selon la revendication 7, caractérisée en ce que les axes de gicleur d'au moins deux ouvertures de gicleur se trouvent dans le même plan sur des branches en regard (3).

9. Douche buccale selon l'une quelconque des revendications 1 à 8, caractérisée en ce que le nombre d'ouvertures de gicleur est de dix au maximum, de préférence de quatre.

10. Douche buccale selon l'une quelconque des revendications 1 à 9, caractérisée en ce que les parties de bord intérieures des branches (3) du support de gicleur (2) sont pourvues de brosses ou floquées.

11. Douche buccale selon l'une quelconque des revendications 1 à 9, caractérisée en ce que les côtés intérieurs tournés vers la surface des dents des branches (3) sont pourvus de protections (39) en plastique élastomère présentant des lèvres (40, 41).
